# FASCICULE DE BREVET EUROPEEN

(11) **EP 3 547 270 B1**
(45) Date de publication et mention de la délivrance du brevet: **26.07.2023**
(21) Numéro de dépôt: 19165675.0
(22) Date de dépôt: 28.03.2019
(51) Int. Cl.: G07C 9/00, B60R 25/25

(54) **PROCÉDÉ DE VÉRIFICATION D'UNE AUTHENTIFICATION BIOMÉTRIQUE**
ÜBERPRÜFUNGSVERFAHREN EINER BIOMETRISCHEN AUTHENTIFIZIERUNG
METHOD FOR VERIFYING A BIOMETRIC AUTHENTICATION

(30) Priorité: 29.03.2018 FR 1852739
(43) Date de publication de la demande: 02.10.2019
(73) Titulaire: Idemia Identity & Security France, 92400 Courbevoie (FR)
(72) Inventeur: PORTERET, Cyril, 92400 COURBEVOIE (FR); SOUMAH, Christophe, 92400 COURBEVOIE (FR)
(74) Mandataire: Idemia

(56) Documents cités:
- WO-A1-2010/069347
- WO-A1-2016/102888
- AU-A- 6 980 200
- AU-B2- 767 563
- FR-A1- 3 050 853
- US-A1- 2017 174 180

## Description

### DOMAINE DE L'INVENTION

L'invention concerne un procédé de contrôle à distance d'un équipement de verrouillage d'un véhicule via un terminal mobile, comprenant la comparaison entre une donnée biométrique candidate et au moins une donnée biométrique de référence.

### ETAT DE LA TECHNIQUE

La location d'un véhicule prend aujourd'hui un certain temps. Après une réservation par téléphone ou en ligne, il est généralement nécessaire que le loueur et l'utilisateur se retrouvent sur le lieu de rendez-vous le jour de la location pour procéder à des formalités administratives et transmettre les clés.

Par exemple, l'utilisateur se présente au guichet et fournit une pièce d'identité et un permis de conduire de sorte à valider la réservation. Si tout est bon, on lui donne en échange la clé et on lui indique l'emplacement du véhicule après lui avoir fait signer un état des lieux.

Or il est fréquent que les utilisateurs arrivent par groupes dans les agences suite à l'atterrissage d'un avion ou l'arrivée d'un train, ce qui crée une longue attente qui ne plait pas aux utilisateurs.

De façon à gagner du temps, il a été proposé des mécanismes de déverrouillage du véhicule à distance tel que décrit dans le document WO2016/102888.

Plus précisément, un terminal mobile de l'utilisateur charge une clé virtuelle du véhicule, et requiert le déverrouillage du véhicule via ce terminal mobile. En réponse, un boitier de commande placé dans le véhicule vérifie la clé virtuelle chargée (via un mécanisme d'authentification challenge-réponse) et le cas échéant fait droit à la requête.

Ce mécanisme apporte satisfaction et évite au loueur d'avoir à se déplacer physiquement jusqu'au véhicule et donner les clés, mais ne permet pas d'éviter complètement les formalités administratives. En effet, le document WO2016/102888 explique bien que c'est le propriétaire (i.e. le loueur) qui autorise l'utilisateur en émettant une requête de certification associant un identifiant du terminal mobile de l'utilisateur et le numéro d'immatriculation du véhicule, en réponse à laquelle la clé virtuelle est fournie.

En pratique, cette solution permet d'anticiper la phase administrative. Par exemple l'utilisateur peut venir à l'agence plusieurs jours avant le début de la location pour fournir la pièce d'identité et le permis de conduire, et le personnel de l'agence pourra lancer directement la procédure de fourniture de la clé virtuelle. En effet, il suffit de prévoir que la clé virtuelle ne soit valide qu'à partir de l'heure du début de la location (ainsi l'utilisateur ne pourra pas l'utiliser pour déverrouiller le véhicule plus tôt). De plus cette clé virtuelle n'est pas un élément physique, donc cela ne pose pas de problème qu'elle soit fournie à plusieurs utilisateurs.

L'utilisateur sortant de son train ou son avion pourra ainsi directement aller au véhicule sans faire la queue à l'agence.

Néanmoins il serait souhaitable de simplifier encore le procédé de sorte à éviter la nécessité d'autorisation manuelle de l'utilisateur, tout en améliorant sa sécurité. Les documents US 2017/174180 et FR 3 050 853 sont considérés comme étant des documents pertinents dans le domaine du contrôle d'accès basé sur une authentification biométrique.

### PRESENTATION DE L'INVENTION

L'invention est définie dans les revendications indépendantes 1, 9, 10 et 11.

Selon un premier aspect, l'invention concerne un procédé de contrôle à distance d'un équipement de verrouillage d'un véhicule via un terminal mobile comprenant des moyens de traitement de données configurés pour mettre en oeuvre une fonction cryptographique donnée et des moyens d'acquisition biométrique, le terminal mobile étant connecté à l'équipement de verrouillage ainsi qu'à un serveur via un réseau, le procédé étant caractérisé en ce qu'il comprend la mise en oeuvre d'étapes de :
(a) Emission depuis le terminal à destination du serveur d'une requête d'authentification auprès de l'équipement de verrouillage ;
(b) Acquisition d'une donnée biométrique candidate par les moyens d'acquisition ;
(c) Vérification par des moyens de traitement de données du serveur ou les moyens de traitement de données du terminal que la donnée biométrique candidate coïncide avec une donnée biométrique de référence ;
(d) Transmission au terminal mobile depuis le serveur d'un chiffré d'une clé virtuelle de l'équipement de verrouillage ;
(e) Authentification du terminal mobile auprès de l'équipement de verrouillage grâce à ladite fonction cryptographique et ledit chiffré de la clé virtuelle de l'équipement de verrouillage.

Selon d'autres caractéristiques avantageuses et non limitatives :
- le terminal mobile comprend des moyens de stockage de données stockant une implémentation blanchie de ladite fonction cryptographique ;
- l'étape (d) comprend le chiffrement de la clé virtuelle de l'équipement de verrouillage en fonction d'une clé secrète du serveur, ladite fonction cryptographique donnée étant fonction de ladite clé secrète du serveur ;
- l'étape (a) comprend la génération préalable de ladite implémentation blanchie de la fonction cryptographique par les moyens de traitement de données du serveur en fonction de ladite clé secrète du serveur, et le chargement de ladite implémentation blanchie de ladite fonction cryptographique ;
- le procédé comprend une étape (a0) préalable de chargement d'au moins un document officiel ;
- ladite implémentation blanchie est générée suite à la vérification par les moyens de traitement de données du serveur dudit document officiel ;
- l'étape (a0) comprend la génération par les moyens de traitement de données du serveur ou les moyens de traitement de données du terminal de la donnée biométrique de référence à partir d'un trait biométrique de référence associé audit document officiel ;
- l'étape (a0) comprend en outre le chargement d'au moins deux documents officiels dont un permis de conduire et une pièce d'identité ;
- l'étape (b) comprend en outre la transmission de ladite donnée candidate au serveur, le serveur disposant de ladite donnée biométrique de référence, et l'étape (c) étant mise en oeuvre par les moyens de traitement de données du serveur ;
- le terminal dispose de ladite donnée biométrique de référence, l'étape (c) étant mise en oeuvre par les moyens de traitement de données du terminal, et comprenant en outre :
   - la génération par les moyens de traitement de données du terminal d'une preuve à divulgation nulle de connaissances du fait que la donnée biométrique candidate et la donnée biométrique de référence coïncident ; et
   - La transmission au serveur de ladite preuve à divulgation nulle de connaissance, pour vérification par les moyens de traitement de données du serveur ;
- le serveur dispose d'une empreinte cryptographique de la donnée biométrique de référence, l'étape (c) comprenant en outre la transmission au serveur de ladite empreinte cryptographique de la donnée biométrique de référence, pour comparaison par les moyens de traitement de données du serveur ;
- l'étape (e) comprend la désactivation de l'équipement de verrouillage de sorte à permettre l'utilisation du véhicule ;
- l'étape (e) comprend l'émission d'un challenge depuis l'équipement de verrouillage, la détermination d'une réponse audit challenge par les moyens de traitement de données du terminal par application de ladite fonction cryptographique à la clé virtuelle chiffrée et au challenge ;
- le terminal mobile et le véhicule comprennent chacun des moyens de géolocalisation, l'étape (e) comprenant en outre la vérification que le terminal mobile et le véhicule présentent des positions proches ;
- le véhicule comprend en outre des moyens d'acquisition biométrique, le procédé comprenant en outre une étape (f) de :
   - Acquisition d'une donnée biométrique de confirmation par les moyens d'acquisition, et transmission au serveur ou au terminal ; et
   - Vérification par les moyens de traitement de données du serveur ou les moyens de traitement de données du terminal que la donnée biométrique de référence coïncide avec la donnée biométrique de candidate et/ou la donnée biométrique de référence ;
- Le procédé comprend la répétition de l'étape (f) ;
- les moyens d'acquisition biométrique consistent en des moyens d'acquisition optique, ladite donnée biométrique étant une photographie de l'utilisateur ;
- la clé virtuelle est associée à un intervalle temporel de validité, l'étape (e) ne pouvant être mise en oeuvre que pendant ledit intervalle temporel de validité.

Selon un deuxième aspect est proposé un ensemble d'un terminal mobile et d'un serveur pour le contrôle à distance d'un équipement de verrouillage d'un véhicule, étant connectés ainsi qu'à l'équipement de verrouillage via un réseau, le terminal comprenant des moyens de traitement de données configurés pour mettre en oeuvre une fonction cryptographique donnée et des moyens d'acquisition biométrique, le serveur comprenant des moyens de traitement de données,
caractérisé en ce que les moyens de traitement de données du terminal et/ou les moyens de traitement de données du serveur sont configurés pour :
- L'émission depuis le terminal à destination du serveur d'une requête d'authentification auprès de l'équipement de verrouillage ;
- L'acquisition une donnée biométrique candidate par les moyens d'acquisition ;
- La vérification que la donnée biométrique candidate coïncide avec une donnée biométrique de référence ;
- La transmission au terminal mobile depuis le serveur d'un chiffré d'une clé virtuelle de l'équipement de verrouillage ;
- L'authentification du terminal mobile auprès de l'équipement de verrouillage grâce à ladite fonction cryptographique et ledit chiffré de la clé virtuelle de l'équipement de verrouillage.

Selon d'autres caractéristiques avantageuses et non limitatives, l'ensemble comprend en outre l'équipement de verrouillage.

Selon un troisième et un quatrième aspect, l'invention propose un produit programme d'ordinateur comprenant des instructions de code pour l'exécution d'un procédé selon le premier aspect de contrôle à distance d'un équipement de verrouillage d'un véhicule ; et un moyen de stockage lisible par un équipement informatique sur lequel un produit programme d'ordinateur comprend des instructions de code pour l'exécution d'un procédé selon le premier aspect de contrôle à distance d'un équipement de verrouillage d'un véhicule.

### DESCRIPTION DES FIGURES

D'autres caractéristiques, buts et avantages de la présente invention apparaîtront à la lecture de la description détaillée qui va suivre, au regard des figures annexées, données à titre d'exemples non limitatifs et sur lesquelles :

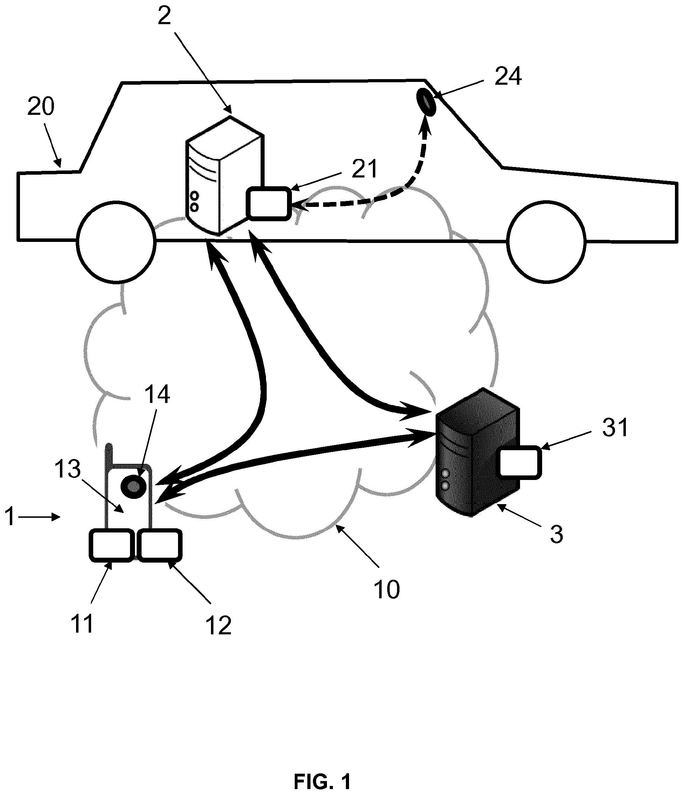

- La figure 1 représente schématiquement un système pour la mise en oeuvre du procédé selon l'invention.

### DESCRIPTION DETAILLEE D'AU MOINS UN MODE DE REALISATION DE L'INVENTION

### Architecture

En référence à la **figure 1****,** on a représenté schématiquement un système pour le contrôle à distance d'un équipement de verrouillage 2 d'un véhicule 20. Par « verrouillage », on entend ici un verrouillage fonctionnel, c'est-à-dire toute façon d'empêcher l'utilisation du véhicule 20. En particulier, le verrouillage peut être un verrouillage physique (des portes, mais également du volant, du levier de vitesse, etc.) ou logiciel (verrouillage du démarrage par exemple). A noter qu'il peut s'agir d'une combinaison de l'un ou l'autre de ces verrouillages.

De façon générale, on comprendra que le présent procédé vise à « la désactivation » de l'équipement de verrouillage 2 de sorte à permettre l'utilisation du véhicule 20.

Ce système comprend au moins trois équipements 1, 2, 3. Le premier équipement 1 est un équipement personnel à un individu, comme par exemple son téléphone mobile, comme expliqué ci-après. Le deuxième équipement 2 est l'équipement de verrouillage déjà décrit. Il est placé dans le véhicule 20. Il s'agit typiquement d'un boitier électronique connecté à une Unité de Commande Electronique du véhicule 20 qui gère le fonctionnement du véhicule (contrôle le démarrage, l'ouverture centralisée des portes, le moteur, etc.) et/ou à au moins un actionneur dédié (par exemple une mâchoire verrouillant le levier de vitesse), pouvant émettre une commande pour verrouiller/déverrouiller le véhicule. Le troisième équipement 3 est un serveur détenu et contrôlé par une entité dite de confiance (par exemple une société de location de véhicule, ou un fournisseur externe de solution de sécurité). A noter que le serveur 3 pourrait être disposé dans le véhicule 20 et peut à ce titre être connecté filialement à l'équipement de verrouillage 2, voire confondu avec lui.

Le terminal 1 comporte des moyens de traitement de données 11, i.e. un calculateur tel que par exemple un processeur, un microprocesseur, un contrôleur, un microcontrôleur, un FPGA etc. Ce calculateur est adapté pour exécuter des instructions de code pour mettre en oeuvre le procédé ci-après.

Le terminal 1 comprend avantageusement une interface de communication lui permettant de dialoguer à distance avec l'équipement 2 et le serveur 3.

Le terminal 1 peut également comprendre des moyens de stockage de données 12 (une mémoire, par exemple flash) une interface utilisateur 13 (typiquement un écran tactile), et des moyens d'acquisition biométrique 14 (voir plus loin).

Cette interface de communication est de préférence la combinaison d'une interface de communication sans fil, par exemple de type Wifi ou Bluetooth ou réseau de téléphonie mobile (GPRS, 3G, 4G ou autre) et de tout autre réseau de communication aval.

Les moyens de données 11 du terminal 1 sont configurés pour mettre en oeuvre une fonction cryptographique donnée. Cette fonction, dont on verra plus loin qu'elle peut être fournie par le serveur 3, en particulier sous la forme d'une implémentation blanchie (dite aussi implémentation en boite blanche) chargée dans la mémoire 12, utilise une clé secrète (dite aussi clé privée) et vise à permettre la gestion sécurisée d'une clé virtuelle de l'équipement 2. Plus précisément, par analogie avec la clé physique d'un véhicule qui permet d'ouvrir les portes et de mettre en marche le moteur, la clé virtuelle permet de désactiver le verrouillage dû à l'équipement 2. Plus précisément, le contrôle de l'équipement 2 par le terminal 1 nécessite que ce dernier prouve la connaissance de sa clé virtuelle, comme l'on verra plus tard. L'homme du métier pourra se base sur n'importe quelle fonction à clé secrète telle que AES ou Triple DES.

Le serveur 3 peut stocker dans sa mémoire 32 une base de données de clés virtuelles chacune associées à un équipement 2. On note qu'une pluralité de clés virtuelles peut être disponible pour chacun des équipements 2 de sorte à pouvoir planifier plusieurs locations avec le même véhicule. Les différents utilisateurs louant le véhicule 20 à plusieurs moments se verront affecter diverses clés, de façon préférée chacune associée à un intervalle temporel de validité (de sorte qu'un utilisateur ne puisse pas utiliser la clé en dehors de la période prévue de location).

Les autres équipements 2, 3 comportent quant à eux également des moyens de traitement de données 21, 31, i.e. un calculateur tel que par exemple un processeur, un microprocesseur, un contrôleur, un microcontrôleur, un FPGA etc. Ce calculateur est adapté pour exécuter des instructions de code pour mettre en oeuvre le procédé ci-après.

Les autres équipements 2, 3 comprennent avantageusement eux aussi des interfaces de communication leur permettant de dialoguer à distance entre eux et avec le terminal 1.

De façon préférée, le terminal 1 et/ou le serveur 3 sont capables de générer une donnée biométrique à partir d'un trait biométrique d'un individu. Le trait biométrique peut par exemple être la forme du visage, ou un ou plusieurs iris de l'individu. L'extraction de la donnée biométrique est mise en oeuvre par un traitement de l'image du trait biométrique qui dépend de la nature du trait biométrique. Des traitements d'images variés pour extraire des données biométriques sont connus de l'Homme du Métier. A titre d'exemple non limitatif, l'extraction de la donnée biométrique peut comprendre une extraction de points particuliers ou d'une forme du visage dans le cas où l'image est une image du visage de l'individu

Le terminal 1 comprend à ce titre des moyens d'acquisition biométrique 14, typiquement un capteur d'image, par exemple un appareil photographique numérique ou une caméra numérique, adapté pour acquérir au moins une image d'un trait biométrique d'un individu.

Très avantageusement, le terminal 1 décrit ci-avant est un dispositif électronique personnel à l'individu, par exemple un téléphone mobile ou « smartphone », une tablette électronique ou encore un ordinateur personnel.

On notera que dans un mode de réalisation préféré qui sera décrit plus loin, le véhicule 20 peut également être équipé 1 de moyens d'acquisition biométrique 24 du même type que ceux du terminal 1, en particulier directement connectés à l'équipement 2. Ainsi, ces moyens 24 peuvent prendre la forme d'une petite caméra disposée dans l'habitacle de sorte à observer le visage du conducteur (par exemple dans le tableau de bord). On note que sont déjà connus des véhicules 20 munis d'une telle caméra pour l'acquisitions d'images du visage du conducteur, en particulier pour détecter des signes d'endormissement (clignement des paupières, chute en avant de la tête, etc.).

Comme l'on verra, le terminal 1 ou le serveur 3 met en oeuvre une authentification de l'individu, c'est-à-dire compare une donnée biométrique dite candidate, car fraichement acquise sur l'individu, à une seule biométrique dite de référence, censée provenir du même individu, afin de vérifier que l'individu à partir duquel ont été obtenues les deux données est bien le même.

Dans ce cas, la donnée biométrique de référence utilisée pour l'authentification est avantageusement une donnée enregistrée dans un document d'identité de l'individu. Par exemple, la donnée biométrique peut être une image du visage figurant sur un document d'identité, ou encore une image du visage ou d'au moins un iris de l'individu enregistré dans une puce radiofréquence contenue dans le document.

Dans un premier mode de réalisation, le serveur 3 dispose de la donnée biométrique de référence et le terminal 1 lui transfère la donnée biométrique candidate pour qu'il réalise l'authentification.

Dans un second mode de réalisation, le serveur 3 ne dispose pas de données biométriques, de sorte à garantir la vie privée des utilisateurs. Ainsi, comme l'on verra c'est le terminal 1 qui réalise lui-même l'authentification.

Dans les deux cas, l'utilisation du terminal 1 pour fournir une donnée biométrique candidate et la mise en oeuvre d'une comparaison avec une donnée biométrique de référence permet à un individu de réaliser lui-même une authentification avant d'en présenter le résultat au deuxième équipement 2. Ainsi l'étape administrative chronophage de présentation à un guichet n'est plus nécessaire.

### Enrôlement

Dans un mode de réalisation préféré, le procédé comprend une étape préalable (a0) « d'enrôlement » permettant la mise à disposition de la donnée biométrique de référence sur le terminal 1 ou le serveur 3 (selon celui qui réalisera la comparaison). Cette étape peut être mise en oeuvre longtemps avant le reste du procédé, et ne nécessite pas d'être réitérée à chaque occurrence du procédé (on peut par exemple prévoir une fois par an). Elle peut aussi être réalisée concomitamment avec la première étape (a) du procédé d'authentification en lui-même qui sera décrite plus loin.

Typiquement, cette étape comprend :
∘ Le chargement d'un document de référence, soit juste sur le terminal 1, soit sur le serveur 3 suite à retransmission par le terminal 1 ;
∘ La génération par les moyens de traitement de données 11 du terminal 1 (ou les moyens de traitement de données 31 du serveur 3) de la donnée biométrique de référence à partir d'un trait biométrique de référence associé à un document officiel.

Dans la mesure où l'on vise la location d'un véhicule 20, de façon préférée sont chargés au moins deux documents officiels dont un permis de conduire et une pièce d'identité tel qu'un passeport ou une carte d'identité.

Dans le cas où c'est le terminal 1 qui stocke la donnée biométrique de référence, l'étape (a0) peut également comprendre la génération d'une empreinte cryptographique de la donnée biométrique de référence, et éventuellement l'obtention d'une signature de la donnée biométrique de référence, pour transmission au serveur 3. L'objectif est de pouvoir, si c'est le terminal 1 qui réalise l'authentification, garantir que le terminal dispose d'une donnée biométrique de référence fiable et non falsifiée.

Par « empreinte cryptographique » d'une donnée biométrique (appelé également « condensat » ou « haché » de la donnée, de l'anglais « hash »), obtenue en appliquant une fonction de hachage cryptographique à la donnée (typiquement des familles SHA-1 ou SHA-2, en particulier SHA-256). L'empreinte a une taille fixe et ne révèle rien sur la donnée dont elle est issue : on ne peut pas retrouver la donnée biométrique à partir de cette empreinte, en tout cas tant que la fonction de hachage utilisée est considérée comme sûre. On peut cependant recalculer l'empreinte à partir de la donnée pour vérifier qu'elle est correcte. L'empreinte de la donnée biométrique peut ainsi être transmise à tout équipement sans dévoiler d'information sur la donnée en elle-même et donc sur la vie privée de l'utilisateur.

La première partie peut être faite de nombreuses façons. Par exemple, l'utilisateur peut directement récupérer sur son terminal 1 le trait biométrique enregistré dans une puce radiofréquence contenue dans le document (si le terminal 1 dispose d'un lecteur radiofréquence de type NFC), prendre une photographie de ce document avec ses moyens 14, ou encore une photographie de lui-même, le cas échéant en présence d'un représentant de l'autorité (par exemple à un guichet en mairie).

L'obtention de la signature nécessite avantageusement de faire valider par une autorité de contrôle la donnée biométrique générée en tant que donnée de référence.

Ainsi, de façon connue l'obtention de la signature de la donnée biométrique de référence à l'étape (a0) comprend préférentiellement la transmission (par le terminal 1 ou le serveur 3) à une entité d'autorité du document officiel (ou tout du moins d'une photographie), de la donnée biométrique de référence, et de l'empreinte cryptographique de la donnée biométrique de référence, et la réception en retour de la signature de la donnée biométrique de référence, après vérification.

Cette vérification peut être faite de nombreuses façons, et consiste simplement à vérifier que le document officiel est authentique, que la donnée biométrique de référence soumise à vérification est bien cohérente avec le document officiel, et que l'empreinte est bien celle de la donnée soumise. S'il y a plusieurs documents officiels, on s'assure que chacun est valide, mais la donnée biométrique de référence n'a besoin d'être obtenue que pour l'un seul d'entre eux.

La signature électronique de la donnée permet de garantir son intégrité et ce de façon définitive (non-répudiation), par analogie avec la signature manuscrite d'un document papier, et est bien connue de l'homme du métier. Elle est générée par l'entité d'autorité à partir de l'empreinte cryptographique de la donnée biométrique de référence, et consiste généralement en un chiffré de l'empreinte cryptographique de la donnée biométrique de référence. Pour cela, de façon connue des moyens de traitement de données de l'entité d'autorité appliquent par exemple une fonction de chiffrement asymétrique à l'empreinte et la retransmettent ainsi chiffrée en tant que signature.

Dans un mode de réalisation, le serveur 3 peut agir en tant qu'autorité de confiance.

De façon générale, on comprendra que l'étape (a0) pourra être mise en oeuvre de n'importe quelle façon permettant de façon sécurisée de fournir au terminal 1 la donnée biométrique de référence avantageusement signée par une autorité par exemple gouvernementale.

Dans le cas où la fonction cryptographique est implémentée de manière blanchie, de façon préférée ladite implémentation blanchie est générée suite à la vérification par les moyens de traitement de données 31 du serveur 3 dudit document officiel, et transmise au terminal 1 pour stockage sur la mémoire 12.

On répète que par « implémentation blanchie » on entend une implémentation de la fonction cryptographique rendant l'extraction de secrets ou clés impossibles, même en cas d'attaque permettant à l'attaquant un accès complet à l'implémentation logicielle de l'algorithme. Plus précisément, une fonction est considérée comme une « boite blanche » lorsque ses mécanismes sont visibles et permettent d'en comprendre le fonctionnement. En d'autres termes, on fait directement l'hypothèse que l'attaquant a accès à tout ce qu'il souhaite (le binaire est complètement visible et modifiable par l'attaquant et celui-ci a le plein contrôle de la plateforme d'exécution). Par conséquent, l'implémentation elle-même est la seule ligne de défense.

Dans le présent cas, ladite fonction cryptographique est à clé secrète, et donc par implémentation blanchie, on entend une représentation de la fonction qui ne permette pas de remonter aux états internes ou aux paramètres lorsque l'opération est exécutée (par application de l'implémentation blanchie aux données d'entrée), en d'autres termes évite d'avoir ladite clé secrète en clair, par exemple en représentant le calcul par une table. En d'autres termes, la clé secrète est « obfusquée » dans l'implémentation blanchie de la fonction cryptographique.

Ainsi, de façon particulièrement préférée, les moyens de traitement de données 31 du serveur génèrent une clé secrète associée de façon unique au terminal 1, génèrent l'implémentation blanchie de la fonction cryptographique pour cette clé secrète, et la stockent en vue de son utilisation ultérieure pour chiffrer une clé virtuelle de l'équipement 2 (voir plus loin).

A noter que la notion de « vérification du document officiel » par le serveur 3 est à prendre au sens large. Si le serveur 3 ne réalise pas la génération de la donnée biométrique de référence (et n'a donc pas accès au document officiel), il peut s'agir de la vérification de la signature de la donnée biométrique de référence (transmise par le terminal 1), notamment avec une clé de l'autorité fournie au serveur 3.

Plus précisément, les moyens de traitement de données 31 du serveur 31 vont déchiffrer la signature avec cette clé, et vérifier que le résultat est bien l'empreinte cryptographique par ailleurs transmise.

De façon générale, cette étape (a0) peut être mise en oeuvre via une application installée sur le terminal 1. Au premier lancement, l'application requiert le chargement du ou des documents officiels, gère leur vérification et l'obtention de la donnée biométrique de référence, et termine par la requête auprès du server 3 de l'implémentation blanchie. Si tout est en ordre, celle-ci est reçue et chargée en réponse, de sorte à rendre l'application pleinement opérationnelle pour la mise en oeuvre du reste du procédé.

A noter qu'il peut être prévu de la répéter par exemple une fois par an pour s'assurer de la validité des documents officiels et renouveler la clé secrète.

### Sélection et obtention de la donnée biométrique candidate

Le procédé commence par une étape (a) d'émission depuis le terminal 1 à destination du serveur 3 d'une requête d'authentification auprès de l'équipement de verrouillage 2.

Il faut comprendre que cette étape (a) peut être très en amont de la location en elle-même, mais longtemps après l'enrôlement (a0).

On peut voir cette étape comme une sélection du véhicule 20. En effet, l'utilisateur choisit en pratique un véhicule 20, pas un équipement 2. En pratique cette étape se traduit comme une requête d'accès à un véhicule 20 choisi, qui se traduit par l'émission d'une requête d'authentification auprès de l'équipement 2 de verrouillage de ce véhicule.

Selon un mode de réalisation, l'utilisateur choisit directement parmi plusieurs véhicules proposés via l'application celui qu'il souhaite louer. Selon un autre mode de réalisation, l'utilisateur se contente de renseigner la catégorie, le modèle, etc. du véhicule qu'il souhaite louer, l'emplacement de la location, et les dates associée, et c'est en pratique le serveur 3 (ou un autre serveur) qui va lui proposer un véhicule 20 qui correspond aux critères. Si l'utilisateur est satisfait, il émet formellement une requête d'accès à ce véhicule.

Dans une étape (b), on va obtenir une donnée biométrique candidate « fraîche ». L'étape (b) comprend l'acquisition d'une donnée biométrique candidate par les moyens d'acquisition 14. Dans le cas d'un capteur d'image, il s'agit typiquement d'un « selfie ».

L'étape (b) peut comprendre la génération de la donnée biométrique candidate à partir d'un trait biométrique fourni par les moyens d'acquisition biométrique 14, et éventuellement la génération d'une empreinte cryptographique de la donnée biométrique candidate obtenue est ensuite générée.

Le terminal 1 peut transmettre la donnée biométrique candidate au serveur 3, mais si la comparaison est faite au niveau du terminal 1 il est préférable de transmettre l'empreinte de la donnée biométrique candidate (plutôt que rien) au serveur 3 pour vérification ultérieure.

De façon préférée les moyens d'acquisition biométrique 14 sont capables de détecter le vivant, de sorte à s'assurer que la donnée biométrique candidate est issue d'un trait « réel ».

### Premier mode de réalisation du procédé d'authentification

Le procédé comprend ensuite une étape (c) de vérification par des moyens de traitement de données 31 du serveur 3 ou les moyens de traitement de données 11 du terminal 1 que la donnée biométrique candidate coïncide avec la donnée biométrique de référence.

Selon le premier mode de réalisation où le serveur 3 dispose en amont de la donnée biométrique de référence et l'étape (b) comprend la transmission de la donnée biométrique candidate, ce sont les moyens de traitement de données 31 du serveur 3 qui mettent en oeuvre cette étape (c).

Cette vérification comprend de façon connue la comparaison de la donnée biométrique candidate et la donnée biométrique de référence.

En effet, de façon connue, la donnée biométrique candidate et la donnée biométrique de référence coïncident si leur distance selon une fonction de comparaison donnée est inférieure à un seuil prédéterminé.

Ainsi, la mise en oeuvre de la comparaison comprend le calcul d'une distance entre les données, dont la définition varie en fonction de la nature des données biométriques considérées. Le calcul de la distance comprend le calcul d'un polynôme entre les composantes des données biométriques, et avantageusement le calcul d'un produit scalaire.

Par exemple, dans le cas où les données biométriques ont été obtenues à partir d'images d'iris, une distance classiquement utilisée pour comparer deux données est la distance de Hamming. Dans le cas où les données biométriques ont été obtenues à partir d'images du visage d'individu, il est courant d'utiliser la distance euclidienne.

Ce type de comparaison est connu de l'Homme du Métier et ne sera pas décrit plus en détails.

L'individu est authentifié si la comparaison révèle un taux de similarité entre la donnée candidate et la donnée de référence excédant un certain seuil, dont la définition dépend de la distance calculée.

En conséquence, si la vérification est concluante (i.e. si la donnée biométrique candidate coïncide avec la donnée biométrique de référence), dans une étape (d) le serveur 3 transmet au terminal mobile 1 un chiffré d'une clé virtuelle de l'équipement de verrouillage 2, pour utilisation par la fonction cryptographique. Naturellement, si si la donnée biométrique candidate et la donnée biométrique de référence ne coïncident pas, le chiffré de la clé virtuelle n'est pas transmis, de sorte que le véhicule ne peut pas être déverrouillé. On note que la clé virtuelle n'est pas en clair, ce qui évite qu'un utilisateur mal intentionné puisse l'extraire.

Le chiffrement de la clé virtuelle est réalisé à la volée par les moyens de traitement de données 31 du serveur 3, en fonction de la clé secrète associée au terminal 1 (i.e. utilisée, et le cas échéant obfusquée, par ladite fonction cryptographique mis en oeuvre par les moyens de traitement de données 11).

### Deuxième mode de réalisation du procédé d'authentification

Dans le deuxième mode de réalisation (où les données biométriques de référence et candidate sont traitées par le seul terminal 1), la vérification qu'elle coïncide est non-interactive, c'est-à-dire qu'elle ne nécessite qu'un « aller » d'information du terminal 1 vers le serveur 3, et pas de « retour ». Et surtout comme expliqué, le serveur 3 ne va recevoir ni la donnée biométrique candidate ni la donnée biométrique de référence (ni aucune donnée permettant de remonter jusqu'à ces dernières), bien qu'il soit pourtant possible pour l'entité de validation de savoir avec certitude si les données biométriques candidate et de référence coïncident.

Pour cela, on utilise un protocole cryptographique générant une « preuve » que la donnée biométrique candidate et la donnée biométrique de référence coïncident, cette preuve ne révélant rien d'autre que le fait que ces données biométriques sont bien possédées par le producteur de la preuve.

Le protocole Pinocchio présenté dans la publication « Bryan Parno, Craig Gentry, Jon Howell, and Mariana Raykova, Pinocchio: Nearly Practical Vérifiable Computation, in Proceedings ofthe IEEE Symposium on Security and Privacy, IEEE, 21 May 2013 » a été un des premiers protocoles de calcul vérifiable permettant à l'exécutant de calculer de manière vérifiable l'application d'une fonction quelconque et au donneur d'ordre de vérifier la preuve associée en un temps de calcul inférieur à celui nécessaire pour réaliser le calcul lui-même.

Ainsi, l'étape (c) comprend préférentiellement la génération par les moyens de traitement de données 11 du terminal 1 d'une preuve à divulgation nulle de connaissances du fait que la donnée biométrique candidate et la donnée biométrique de référence coïncident.

Plus précisément, ladite preuve à divulgation nulle de connaissances garantit l'affirmation suivante : « étant données deux empreintes cryptographiques, il existe une donnée biométrique candidate et une donnée biométrique de référence ayant pour empreintes cryptographiques respectives les empreintes cryptographiques données, et coïncidant ».

Ainsi, on peut lier les deux empreintes cryptographiques aux données biométriques candidate et de référence mais on ne peut pas obtenir d'informations sur le contenu de ces données biométriques. Le protocole cryptographique donne une preuve rapide à vérifier (moins d'une demi-seconde) et qu'on ne peut pas falsifier : il est quasi impossible (probabilité inférieure à 1/2⁸⁰, voire inférieure à 1/2¹²⁸ selon les paramètres choisis pour réaliser la preuve, celle-ci étant alors plus lente à réaliser) de faire accepter une preuve de l'affirmation ci-dessus si le processus ne s'est pas déroulé conformément à ce qui est spécifié.

Dans la réalisation de la preuve, le terminal 1 utilise la possibilité de réaliser des preuves à divulgation nulle de connaissance pour cacher les données biométriques. Ainsi la preuve ne donne aucune information sur les données biométriques elles-mêmes.

Naturellement, l'étape (c) comprend avantageusement la vérification préalable par les moyens de traitement de données 11 du terminal 1 que la donnée biométrique candidate et la donnée biométrique de référence coïncident, en comparant la donnée biométrique candidate et la donnée biométrique de référence d'une des façons décrites précédemment.

Par exemple, la preuve peut être plus précisément une preuve à divulgation nulle de connaissances du fait qu'étant données deux empreintes cryptographiques, il existe une donnée biométrique candidate et une donnée biométrique de référence ayant pour empreintes cryptographiques respectives les empreintes cryptographiques données, telles que leur distance selon la fonction de comparaison donnée est inférieure au seuil prédéterminé.

De façon préférée, ladite preuve à divulgation nulle de connaissances est un objet cryptographique de type zkSNARK (« zero-knowledge Succinct Non Interactive ARgument of Knowledge », i.e. Argument de connaissance non interactive à divulgation nulle de connaissances). L'homme du métier pourra consulter la demande FR1653890 pour en savoir davantage sur des preuves à divulgation nulle de connaissances adaptées à la comparaison de données biométriques.

En particulier, le protocole Pinocchio permet à celui qui réalise la preuve de cacher certaines des entrées du calcul dont il fait la preuve. Dans le présent cas, il s'agit de réaliser le calcul suivant :
Entrée : les empreintes cryptographiques de la donnée biométrique candidate *h_{fresh}* = *H*(*t_{fresh}*) et de référence *h_{ref}* = *H*(*t_{ref}*), le résultat de la comparaison des données biométriques candidate *t_{fresh}* et de référence *t_{ref}* (i.e. le booléen selon qu'elles coïncident ou non), et un vecteur d'initialisation IV
Entrée privée : les données biométriques candidate *t_{fresh}* et de référence *t_{ref}.*
Sortie : la preuve π que le prouveur connaît bien des données biométriques *t_{fresh}* et *t_{ref}* qui se hachent en *h_{fresh}* et *h_{ref}* et dont le résultat de la comparaison est celui attendu.

L'étape (c) comprend ensuite la transmission au serveur 3 de ladite preuve à divulgation nulle de connaissance, de l'empreinte cryptographique de la donnée biométrique candidate, et de l'empreinte cryptographique de la donnée biométrique de référence (si cela n'a pas été déjà fait). Eventuellement, la signature de la donnée biométrique de référence est à nouveau transmise pour comparaison avec celle dont le serveur 1 dispose, mais aucune autre donnée n'est transmise (i.e. on transmet uniquement l'empreinte cryptographique de la donnée biométrique candidate, l'empreinte cryptographique de la donnée biométrique de référence, et la signature de la donnée biométrique de référence). On répète que les données biométriques ne sont quant à elles pas transmises dans ce mode de réalisation.

Les moyens de traitement de données 31 du serveur 3 peuvent alors vérifier que la preuve à divulgation nulle de connaissance est valide. La signature peut également être à nouveau vérifiée.

Si c'est le cas, l'utilisateur est authentifié, et l'étape (d) est mise en oeuvre.

La vérification de la preuve n'est pas interactive (le serveur 3 n'a pas besoin de contacter le prouveur, i.e. le terminal 1) et se fait simplement en temps constant en vérifiant que la preuve est valide, ce qui démontre (à une probabilité infime près) au serveur 3 que la propriété prétendue est vraie, i.e. que l'utilisateur dispose d'une donnée biométrique candidate et d'une donnée biométrique de référence qui coïncident. Il se convainc ainsi que l'identité de l'utilisateur est confirmée (et que personne n'a usurpé une identifié) malgré l'absence de donnée biométrique.

Grâce à la preuve la confidentialité peut être totale (puisque la génération de la preuve ne nécessite pas de communication) sans que le serveur 3 ne prenne de risque puisque la preuve lui garantit que l'entité de preuve dispose bien des données biométriques.

La preuve est courte (voir très courte - de l'ordre de quelques centaines d'octets), la transmettre avec les empreintes cryptographiques du document ne pose aucun problème de bande passante. De plus, la vérification de cette preuve est rapide (en temps constant, quelques dizaines de millièmes de secondes), ce qui n'augmente pas la charge de calcul au niveau des moyens de traitement de données 31 du serveur 3, qui doit gérer des centaines d'authentifications simultanées. La génération de la preuve est quant à elle plus lourde en termes de temps de calcul, mais comme l'étape (c) est mise en oeuvre du côté terminal 1 qui est personnel (et n'est impliqué que dans l'authentification de son seul propriétaire), ce temps de calcul additionnel n'est pas problématique, et même bien accueilli par les utilisateurs qui n'ont pas de problème à consacrer quelques dizaines de secondes du temps de fonctionnement de leur terminal personnel si c'est pour éviter de faire la queue à des guichets.

Ainsi le présent procédé est optimal aussi bien pour l'utilisateur que pour le prestataire (le loueur).

### Déverrouillage

Dans une étape (e), le terminal mobile 1 s'authentifie auprès de l'équipement de verrouillage 2 grâce à ladite fonction cryptographique et ledit chiffré de la clé virtuelle de l'équipement de verrouillage 2.

Plus précisément, la fonction cryptographique permet indirectement de « déchiffrer » la clé virtuelle vis-à-vis de l'équipement 2. De façon préférée, la clé virtuelle n'apparait cependant jamais en clair pour des question de sécurité.

Si l'authentification est obtenue, l'étape (e) comprend comme expliqué la désactivation subséquente de l'équipement de verrouillage 2 de sorte à permettre l'utilisation du véhicule 20.

Selon un mode de réalisation préféré, pour mettre en oeuvre l'authentification l'étape (e) comprend l'émission d'un challenge depuis l'équipement de verrouillage 2, et la détermination d'une réponse audit challenge par les moyens de traitement de données 11 du terminal 1 par application de ladite fonction cryptographique à la clé virtuelle chiffrée et au challenge.

Le challenge peut être générée de façon aléatoire ou pseudo-aléatoire par les moyens de traitement 21 du terminal 1.

Ensuite, dans l'étape (e), la fonction cryptographique prend en entrée la clé virtuelle et le challenge, et en déduit une réponse au challenge. Le même calcul est fait du coté équipement 2 de sorte à calculer la réponse attendue. A noter que celui-ci peut disposer d'une pluralité de clés virtuelles toutes valides, et donc calculer une pluralité de réponses attendues (en utilisant une fonction cryptographique du même type que celle implémentée par les moyens de traitement de données 11 du terminal 1).

Les moyens de traitement de données 21 de l'équipement 2 vérifient alors que la réponse reçue depuis le terminal 1 est bien l'une de ces attendues, ce qui prouve la connaissance de la clé virtuelle par le terminal 1 sans qu'il soit nécessaire de la transmettre.

A noter qu'on pourra prévoir d'autres mécanismes, par exemple l'émission par l'équipement 2 d'une clé publique pour le chiffrement par le terminal de la clé virtuelle (déchiffrement puis rechiffrement à la volée par la fonction cryptographique implémentée), la transmission de la clé virtuelle chiffrée par la clé de l'équipement 2, et son déchiffrement (en utilisant une clé secrète de l'équipement 2) et sa comparaison avec les clés virtuelles dont dispose l'équipement 2.

Par ailleurs, l'étape (e) peut comprendre des vérifications supplémentaires pour autoriser l'authentification, i.e. la connaissance de la clé virtuelle n'est pas nécessairement suffisante pour obtenir la désactivation subséquente de l'équipement de verrouillage 2.

Tout d'abord, comme expliqué, la clé virtuelle peut être associée à un intervalle temporel de validité (la durée de la location), l'étape (e) ne pouvant être mise en oeuvre que pendant ledit intervalle temporel de validité. En d'autres termes, l'étape (e) comprend la vérification par les moyens de traitement de données 21 de l'équipement 2 que l'instant présent est dans ladite période de validité, i.e. qu'on ne tente pas d'accéder au véhicule 20 avant le début prévu de la location.

Ensuite, le terminal mobile 1 et le véhicule 20 peuvent comprendre chacun des moyens de géolocalisation (par exemple un GPS, ou par triangulation), l'étape (e) comprenant alors en outre la vérification que le terminal mobile 1 et le véhicule 20 présentent des positions proches. Par proche, on entend à côté du véhicule 20, c'est-à-dire que l'utilisateur doit avoir le véhicule 20 en visuel immédiat. En pratique, on peut définir proche comme à une distance inférieure à un seuil donné (représentatif du fait d'être à coté), typiquement quelques mètres. L'idée est de vérifier que l'utilisateur est physiquement présent au voisinage du véhicule 20 lorsqu'il requiert le déverrouillage, pour éviter des fraudes distantes.

En complément ou alternativement, si le véhicule 20 comprend en outre des moyens d'acquisition biométrique 24 (connectés à l'équipement 2), le procédé comprend préférentiellement en outre une étape (f) (qui peut être incluse dans l'étape (e) avant la désactivation subséquente de l'équipement de verrouillage 2) de :
- Acquisition d'une donnée biométrique de confirmation (qui en pratique est comparable avec la donnée biométrique candidate, juste plus récente) par les moyens d'acquisition 24, et transmission au serveur 3 ou au terminal 1 (celui qui dispose de la donnée biométrique de référence) ; et
- Vérification par les moyens de traitement de données 31 du serveur 3 ou les moyens de traitement de données 11 du terminal 1 que la donnée biométrique de confirmation coïncide avec la donnée biométrique de candidate et/ou la donnée biométrique de référence (de la même façon que pour l'étape (c)).

En effet, on peut envisager un cas dans lequel l'utilisateur ayant fait la location mettrait en oeuvre le procédé, mais laisserait un tiers conduire à sa place, ce qui n'est pas autorisé. L'objectif de l'étape (f) est de vérifier que le conducteur est bien l'utilisateur qui s'est authentifié, lequel est le seul qui a vraiment le droit de conduire. De surcroît,

De façon préférée, l'étape (f) est répétée à intervalles réguliers, par exemple touts les heures, ou à chaque démarrage, de sorte à s'assurer qu'une fois que le véhicule 20 a été déverrouillé il n'y a pas un échange de conducteurs.

Il est à noter que certains contrats de locations autorisent plusieurs conducteurs. L'idée est de mettre en oeuvre pour chacun des conducteurs supplémentaires un « enrôlement » spécifique (par exemple après l'étape (a), cet enrôlement supplémentaire pouvant reprendre tout ou partie de l'étape (a0) mais n'entraînant pas de modification de l'implémentation de la fonction cryptographique, laquelle est liée au terminal 1), dans lequel on va fournir les documents d'identité nécessaires (de sorte à avoir pour les conducteurs supplémentaires des données biométriques de référence). Les étapes (b) et (c) sont le cas échéant mises en oeuvre pour ces autres conducteurs.

A noter qu'il n'y a pas forcément besoin de donnée biométrique de référence pour les autres conducteurs, et qu'on peut éventuellement se contenter de mettre en oeuvre l'étape (b) pour acquérir une donnée candidate.

L'étape (f) vérifie alors que la donnée biométrique de confirmation coïncide avec l'une des données biométriques candidates et/ou l'une des données biométriques de référence.

### Ensemble d'équipements

Selon un deuxième aspect, est proposé un ensemble de traitement de données biométriques pour la mise en oeuvre du procédé selon le premier aspect, i.e. pour le contrôle à distance d'un équipement de verrouillage 2 d'un véhicule 20.

L'ensemble comprend un terminal 1 et un serveur 3 connectés, ainsi qu'à l'équipement de verrouillage 2. L'ensemble peut comprendre l'équipement 2.

Comme expliqué, le terminal 1 comprend des moyens de traitement de données 11 configurés pour mettre en oeuvre une fonction cryptographique donnée et des moyens d'acquisition biométrique 14 ; et le serveur 3 comprend des moyens de traitement de données 31.

Les moyens de traitement de données 11 du terminal 1 et/ou les moyens de traitement de données 31 du serveur 3 sont configurés pour :
- L'émission depuis le terminal 1 à destination du serveur 3 d'une requête d'authentification auprès de l'équipement de verrouillage 2 ;
- L'acquisition d'une donnée biométrique candidate par les moyens d'acquisition 14 ;
- La vérification que la donnée biométrique candidate coïncide avec une donnée biométrique de référence ;
- Si la donnée biométrique candidate coïncide avec la donnée biométrique de référence, la transmission au terminal mobile 1 depuis le serveur 3 d'un chiffré d'une clé virtuelle de l'équipement de verrouillage 2 ;
- L'authentification du terminal mobile 1 auprès de l'équipement de verrouillage 2 grâce à ladite fonction cryptographique et ledit chiffré de la clé virtuelle de l'équipement de verrouillage 2

Dans le mode de réalisation où c'est le terminal 1 qui dispose de la donnée biométrique de référence, ce dernier peut mettre en oeuvre l'essentiel du procédé selon le premier aspect.

L'invention concerne ainsi également un terminal mobile 1 pour le contrôle à distance d'un équipement de verrouillage 2 d'un véhicule 20, comprenant des moyens de traitement de données 11 configurés pour mettre en oeuvre une fonction cryptographique donnée et des moyens d'acquisition biométrique 14, le terminal mobile 1 étant connecté à l'équipement de verrouillage 2 ainsi qu'à un serveur 3 via un réseau 10, le terminal mobile 1 étant caractérisé en ce que les moyens de traitement de données 11 sont configurés pour :
- L'émission depuis le terminal 1 à destination du serveur 3 d'une requête d'authentification auprès de l'équipement de verrouillage 2 ;
- L'acquisition d'une donnée biométrique candidate par les moyens d'acquisition 14 ;
- La vérification que la donnée biométrique candidate coïncide avec une donnée biométrique de référence ;
- Si la donnée biométrique candidate coïncide avec la donnée biométrique de référence, la réception depuis le serveur 3 d'un chiffré d'une clé virtuelle de l'équipement de verrouillage 2 ;
- L'authentification du terminal mobile 1 auprès de l'équipement de verrouillage 2 grâce à ladite fonction cryptographique et ledit chiffré de la clé virtuelle de l'équipement de verrouillage 2.

### Produit programme d'ordinateur

Selon un troisième et un quatrième aspects, l'invention concerne un produit programme d'ordinateur comprenant des instructions de code pour l'exécution (en particulier sur les moyens de traitement de données 11, 21, 31, du terminal 1, de l'équipement de verrouillage 2 et/ou du serveur 3) d'un procédé selon le premier aspect de l'invention de contrôle à distance de l'équipement de verrouillage 2 d'un véhicule 20, ainsi que des moyens de stockage lisibles par un équipement informatique (une mémoire des équipements 1, 2, 3) sur lequel on trouve ce produit programme d'ordinateur.

## Revendications

1. Procédé de contrôle à distance d'un équipement de verrouillage (2) d'un véhicule (20) via un terminal mobile (1) comprenant des moyens de traitement de données (11) configurés pour mettre en oeuvre une fonction cryptographique donnée et des moyens d'acquisition biométrique (14), le terminal mobile (1) étant connecté à l'équipement de verrouillage (2) ainsi qu'à un serveur (3) via un réseau (10), le procédé comprenant la mise en oeuvre d'étapes de :
(a) Emission depuis le terminal (1) à destination du serveur (3) d'une requête d'authentification auprès de l'équipement de verrouillage (2) ;
(b) Acquisition d'une donnée biométrique candidate par les moyens d'acquisition (14) ;
(c) Vérification par les moyens de traitement de données (11) du terminal (1) que la donnée biométrique candidate coïncide avec une donnée biométrique de référence dont dispose le terminal (1) ;
(e) Authentification du terminal mobile (1) auprès de l'équipement de verrouillage (2) grâce à ladite fonction cryptographique et d'une clé virtuelle chiffrée de l'équipement de verrouillage (2) ;
Le procédé étant **caractérisé en ce que** l'étape (c) comprend la génération par les moyens de traitement de données (11) du terminal (1) d'une preuve à divulgation nulle de connaissances du fait que, étant données une empreinte cryptographique de la donnée biométrique candidate et une empreinte cryptographique de la donnée biométrique de référence, la donnée biométrique candidate et la donnée biométrique de référence ont pour empreintes cryptographiques respectives les deux empreintes, et que les deux données biométriques coïncident ; et la transmission au serveur (3) de ladite preuve à divulgation nulle de connaissances, de l'empreinte cryptographique de la donnée biométrique candidate et de l'empreinte cryptographique de la donnée biométrique de référence, pour vérification par des moyens de traitement de données (31) du serveur (3) ;
et **en ce qu'**il comprend en outre une étape (d) de vérification, par les moyens de traitement (31) du serveur (3) de la validité de la preuve à divulgation nulle de connaissances, et, si la preuve à divulgation nulle de connaissances est valide, de chiffrement de la clé virtuelle de l'équipement de verrouillage (2) en fonction d'une clé secrète du serveur (3), ladite fonction cryptographique donnée étant fonction de ladite clé secrète du serveur (3) et de transmission au terminal mobile (1) depuis le serveur (3) de la clé virtuelle chiffrée de l'équipement de verrouillage (2),
l'étape (e) comprenant la désactivation de l'équipement de verrouillage (2) de sorte à permettre l'utilisation du véhicule (20).

2. Procédé selon la revendication 1, dans lequel le terminal mobile (1) comprend des moyens de stockage de données (12) stockant une implémentation blanchie de ladite fonction cryptographique, ladite implémentation blanchie est une représentation de la fonction cryptographique qui ne permet pas de remonter aux états internes ou aux paramètres lorsque l'opération est exécutée.

3. Procédé selon la revendication 2, dans lequel l'étape (a) comprend la génération préalable de ladite implémentation blanchie de la fonction cryptographique par les moyens de traitement de données (31) du serveur (3) en fonction de ladite clé secrète du serveur (3), et le chargement de ladite implémentation blanchie de ladite fonction cryptographique.

4. Procédé selon l'une des revendications 1 à 3, comprenant une étape (a0) préalable de chargement d'au moins un document officiel, en particulier d'au moins deux documents officiels dont un permis de conduire et une pièce d'identité.

5. Procédé selon les revendications 3 et 4 en combinaison, dans lequel ladite implémentation blanchie est générée suite à la vérification par les moyens de traitement de données (31) du serveur (3) dudit document officiel.

6. Procédé selon l'une des revendications 4 et 5, dans lequel l'étape (a0) comprend la génération par les moyens de traitement de données (31) du serveur (3) ou les moyens de traitement de données (11) du terminal (1) de la donnée biométrique de référence à partir d'un trait biométrique de référence associé audit document officiel.

7. Procédé selon l'une des revendications 1 à 6, dans lequel l'étape (e) comprend l'émission d'un challenge depuis l'équipement de verrouillage (2), la détermination d'une réponse audit challenge par les moyens de traitement de données (11) du terminal (1) par application de ladite fonction cryptographique à la clé virtuelle chiffrée et au challenge.

8. Procédé selon l'une des revendications 1 à 7, dans lequel le véhicule (20) comprend en outre des moyens d'acquisition biométrique (24), le procédé comprenant en outre une étape (f) de :
- Acquisition d'une donnée biométrique de confirmation par les moyens d'acquisition biométrique (24) du véhicule, et transmission au terminal (1) ; et
- Vérification par les moyens de traitement de données (11) du terminal (1) que la donnée biométrique de confirmation coïncide avec la donnée biométrique candidate et/ou la donnée biométrique de référence.

9. Ensemble d'un terminal mobile (1) et d'un serveur (3) pour le contrôle à distance d'un équipement de verrouillage (2) d'un véhicule (20), étant connectés ainsi qu'à l'équipement de verrouillage (2) via un réseau (10), le terminal (1) comprenant des moyens de traitement de données (11) configurés pour mettre en oeuvre une fonction cryptographique donnée et des moyens d'acquisition biométrique (14), le serveur (3) comprenant des moyens de traitement de données (31),
dans lequel les moyens de traitement de données (11) du terminal (1) sont configurés pour :
- L'émission depuis le terminal (1) à destination du serveur (3) d'une requête d'authentification auprès de l'équipement de verrouillage (2) ;
- L'acquisition d'une donnée biométrique candidate par les moyens d'acquisition (14) ;
- La vérification que la donnée biométrique candidate coïncide avec une donnée biométrique de référence dont dispose le terminal (1) ;
- L'authentification du terminal mobile (1) auprès de l'équipement de verrouillage (2) grâce à ladite fonction cryptographique et d'une clé virtuelle chiffrée de l'équipement de verrouillage (2) ;
**caractérisé en ce que** les moyens de traitement de données (11) du terminal (1) sont en outre configurés pour :
- La génération d'une preuve à divulgation nulle de connaissances du fait que, étant données une empreinte cryptographique de la donnée biométrique candidate et une empreinte cryptographique de la donnée biométrique de référence, la donnée biométrique candidate et la donnée biométrique de référence ont pour empreintes cryptographiques respectives les deux empreintes, et que les deux données biométriques coïncident ;
- La transmission au serveur (3) de ladite preuve à divulgation nulle de connaissances, de l'empreinte cryptographique de la donnée biométrique candidate, et de l'empreinte cryptographique de la donnée biométrique de référence ;
- La désactivation de l'équipement de verrouillage (2) de sorte à permettre l'utilisation du véhicule (20) ;
et les moyens de traitement de données (31) du serveur (3) sont configurés pour :
- la vérification de la validité de la preuve à divulgation nulle de connaissances ;
- Si la preuve à divulgation nulle de connaissances est valide, le chiffrement de la clé virtuelle de l'équipement de verrouillage (2) en fonction d'une clé secrète du serveur (3), ladite fonction cryptographique donnée étant fonction de ladite clé secrète du serveur (3), et la transmission au terminal mobile (1) depuis le serveur (3) de la clé virtuelle chiffrée de l'équipement de verrouillage (2).

10. Produit programme d'ordinateur comprenant des instructions de code pour l'exécution d'un procédé selon l'une des revendications 1 à 8 de contrôle à distance d'un équipement de verrouillage (2) d'un véhicule (20), lorsque les étapes de l'une des revendications 1 à 8 sont exécutées respectivement par un terminal mobile, par un serveur et par un équipement de verrouillage d'un véhicule.

11. Moyen de stockage lisible par un équipement informatique comprenant le produit programme d'ordinateur de la revendication 10.

## Patentansprüche

1. Verfahren zur Fernsteuerung einer Verriegelungseinrichtung (2) eines Fahrzeugs (20) über ein mobiles Endgerät (1), das Datenverarbeitungsmittel (11), die dafür ausgelegt sind, eine gegebene kryptographische Funktion auszuführen, und Mittel zur biometrischen Erfassung (14) umfasst, wobei das mobile Endgerät (1) mit der Verriegelungseinrichtung (2) sowie mit einem Server (3) über ein Netz (10) verbunden ist, wobei das Verfahren die Ausführung der Schritte umfasst:
(a) Senden, vom Endgerät (1) an den Server (3), einer Anforderung zur Authentifizierung an der Verriegelungseinrichtung (2);
(b) Erfassung eines als Kandidat in Frage kommenden biometrischen Datenelements durch die Erfassungsmittel (14);
(c) Überprüfung, durch die Datenverarbeitungsmittel (11) des Endgerätes (1), ob das als Kandidat in Frage kommende biometrische Datenelement mit einem biometrischen Referenzdatenelement, über welches das Endgerät (1) verfügt, übereinstimmt;
(e) Authentifizierung des mobilen Endgerätes (1) an der Verriegelungseinrichtung (2) mithilfe der kryptographischen Funktion und eines verschlüsselten virtuellen Schlüssels der Verriegelungseinrichtung (2);
wobei das Verfahren **dadurch gekennzeichnet ist, dass** Schritt (c) die Erzeugung, durch die Datenverarbeitungsmittel (11) des Endgerätes (1), eines Null-Wissen-Beweises der Tatsache umfasst, dass, wenn ein kryptographischer Fingerabdruck des als Kandidat in Frage kommenden biometrischen Datenelements und ein kryptographischer Fingerabdruck des biometrischen Referenzdatenelements gegeben sind, das als Kandidat in Frage kommende biometrische Datenelement und das biometrische Referenzdatenelement als jeweilige kryptographische Fingerabdrücke die zwei Fingerabdrücke haben, und dass die zwei biometrischen Datenelemente übereinstimmen; und die Übertragung des Null-Wissen-Beweises, des kryptographischen Fingerabdrucks des als Kandidat in Frage kommende biometrischen Datenelements und des kryptographischen Fingerabdrucks des biometrischen Referenzdatenelements an den Server (3), zur Überprüfung durch Datenverarbeitungsmittel (31) des Servers (3);
und dadurch, dass es außerdem einen Schritt (d) der Überprüfung, durch die Verarbeitungsmittel (31) des Servers (3), der Gültigkeit des Null-Wissen-Beweises, und falls der Null-Wissen-Beweis gültig ist, der Verschlüsselung des virtuellen Schlüssels der Verriegelungseinrichtung (2) in Abhängigkeit von einem geheimen Schlüssel des Servers (3), wobei die gegebene kryptographische Funktion von dem geheimen Schlüssel des Servers (3) abhängig ist, und der Übertragung, an das mobile Endgerät (1) von dem Server (3), des verschlüsselten virtuellen Schlüssels der Verriegelungseinrichtung (2) umfasst,
wobei Schritt (e) die Deaktivierung der Verriegelungseinrichtung (2) umfasst, um die Benutzung des Fahrzeugs (20) zu ermöglichen.

2. Verfahren nach Anspruch 1, wobei das mobile Endgerät (1) Datenspeicherungsmittel (12) umfasst, die eine verschleierte Implementierung der kryptographischen Funktion speichern, wobei die verschleierte Implementierung eine Darstellung der kryptographischen Funktion ist, welche nicht ermöglicht, auf die inneren Zustände oder auf die Parameter rückzuschließen, wenn die Operation ausgeführt wird.

3. Verfahren nach Anspruch 2, wobei Schritt (a) die vorausgehende Erzeugung der verschleierten Implementierung der kryptographischen Funktion durch die Datenverarbeitungsmittel (31) des Servers (3) in Abhängigkeit von dem geheimen Schlüssel des Servers (3) und das Laden der verschleierten Implementierung der kryptographischen Funktion umfasst.

4. Verfahren nach einem der Ansprüche 1 bis 3, welches einen vorausgehenden Schritt (a0) des Ladens mindestens eines amtlichen Dokuments, insbesondere mindestens zweier amtlicher Dokumente, darunter eines Führerscheins und eines Personalausweises, umfasst.

5. Verfahren nach den Ansprüchen 3 und 4 in Kombination, wobei die verschleierte Implementierung im Anschluss an die Überprüfung des amtlichen Dokuments durch die Datenverarbeitungsmittel (31) des Servers (3) erzeugt wird.

6. Verfahren nach einem der Ansprüche 4 und 5, wobei Schritt a(0) die Erzeugung, durch die Datenverarbeitungsmittel (31) des Servers (3) oder die Datenverarbeitungsmittel (11) des Endgerätes (1), des biometrischen Referenzdatenelements aus einem biometrischen Referenzmerkmal, das mit dem amtlichen Dokument verknüpft ist, umfasst.

7. Verfahren nach einem der Ansprüche 1 bis 6, wobei Schritt (e) das Senden einer Challenge von der Verriegelungseinrichtung (2) und die Bestimmung einer Antwort auf die Challenge durch die Datenverarbeitungsmittel (11) des Endgerätes (1) durch Anwendung der kryptographischen Funktion auf den verschlüsselten virtuellen Schlüssel und auf die Challenge umfasst.

8. Verfahren nach einem der Ansprüche 1 bis 7, wobei das Fahrzeug (20) außerdem Mittel zur biometrischen Erfassung (24) umfasst, wobei das Verfahren außerdem einen Schritt (f) umfasst der:
- Erfassung eines biometrischen Bestätigungsdatenelements durch die Mittel zur biometrischen Erfassung (24) des Fahrzeugs und Übertragung an das Endgerät (1); und
- Überprüfung, durch die Datenverarbeitungsmittel (11) des Endgerätes (1), ob das biometrische Bestätigungsdatenelement mit dem als Kandidat in Frage kommenden biometrischen Datenelement und/oder dem biometrischen Referenzdatenelement übereinstimmt.

9. Anordnung eines mobilen Endgerätes (1) und eines Servers (3) zur Fernsteuerung einer Verriegelungseinrichtung (2) eines Fahrzeugs (20), die miteinander sowie mit der Verriegelungseinrichtung (2) über ein Netz (10) verbunden sind, wobei das Endgerät (1) Datenverarbeitungsmittel (11), die dafür ausgelegt sind, eine gegebene kryptographische Funktion auszuführen, und Mittel zur biometrischen Erfassung (14) umfasst, wobei der Server (3) Datenverarbeitungsmittel (31) umfasst,
wobei die Datenverarbeitungsmittel (11) des Endgerätes (1) ausgelegt sind für:
- das Senden, vom Endgerät (1) an den Server (3), einer Anforderung zur Authentifizierung an der Verriegelungseinrichtung (2);
- die Erfassung eines als Kandidat in Frage kommenden biometrischen Datenelements durch die Erfassungsmittel (14);
- die Überprüfung, ob das als Kandidat in Frage kommende biometrische Datenelement mit einem biometrischen Referenzdatenelement, über welches das Endgerät (1) verfügt, übereinstimmt;
- die Authentifizierung des mobilen Endgerätes (1) an der Verriegelungseinrichtung (2) mithilfe der kryptographischen Funktion und eines verschlüsselten virtuellen Schlüssels der Verriegelungseinrichtung (2);
**dadurch gekennzeichnet, dass** die Datenverarbeitungsmittel (11) des Endgerätes (1) außerdem ausgelegt sind für:
- die Erzeugung eines Null-Wissen-Beweises der Tatsache, dass, wenn ein kryptographischer Fingerabdruck des als Kandidat in Frage kommenden biometrischen Datenelements und ein kryptographischer Fingerabdruck des biometrischen Referenzdatenelements gegeben sind, das als Kandidat in Frage kommende biometrische Datenelement und das biometrische Referenzdatenelement als jeweilige kryptographische Fingerabdrücke die zwei Fingerabdrücke haben, und dass die zwei biometrischen Datenelemente übereinstimmen;
- die Übertragung des Null-Wissen-Beweises, des kryptographischen Fingerabdrucks des als Kandidat in Frage kommende biometrischen Datenelements und des kryptographischen Fingerabdrucks des biometrischen Referenzdatenelements an den Server (3) ;
- die Deaktivierung der Verriegelungseinrichtung (2), um die Benutzung des Fahrzeugs (20) zu ermöglichen;
und die Datenverarbeitungsmittel (31) des Servers (3) ausgelegt sind für:
- die Überprüfung der Gültigkeit des Null-Wissen-Beweises;
- falls der Null-Wissen-Beweis gültig ist, die Verschlüsselung des virtuellen Schlüssels der Verriegelungseinrichtung (2) in Abhängigkeit von einem geheimen Schlüssel des Servers (3), wobei die gegebene kryptographische Funktion von dem geheimen Schlüssel des Servers (3) abhängig ist, und die Übertragung, an das mobile Endgerät (1) von dem Server (3), des verschlüsselten virtuellen Schlüssels der Verriegelungseinrichtung (2).

10. Computerprogrammprodukt, welches Codeanweisungen zur Ausführung eines Verfahrens nach einem der Ansprüche 1 bis 8 zur Fernsteuerung einer Verriegelungseinrichtung (2) eines Fahrzeugs (20), wenn die Schritte eines der Ansprüche 1 bis 8 von einem mobilen Endgerät, von einem Server bzw. von einer Verriegelungseinrichtung eines Fahrzeugs ausgeführt werden, umfasst.

11. Von einem IT-Gerät lesbares Speichermittel, welches das Computerprogrammprodukt nach Anspruch 10 umfasst.

## Claims

1. Method for remotely controlling an item of equipment (2) for locking a vehicle (20) via a mobile terminal (1) comprising data processing means (11) which are configured to implement a given cryptographic function and biometric acquisition means (14), the mobile terminal (1) being connected to the item of locking equipment (2) as well as to a server (3) via a network (10), the method comprising implementing steps of:
(a) transmitting, from the terminal (1) to the server (3), a request to authenticate with the item of locking equipment (2);
(b) the acquisition means (14) acquiring a candidate biometric datum;
(c) the data processing means (11) of the terminal (1) checking that the candidate biometric datum coincides with a reference biometric datum which the terminal (1) has at its disposal;
(e) authenticating the mobile terminal (1) with the item of locking equipment (2) by virtue of said cryptographic function and of an encrypted virtual key of the item of locking equipment (2);
the method being **characterized in that** step (c) comprises the data processing means (11) of the terminal (1) generating a zero-knowledge proof that, given a cryptographic mark of the candidate biometric datum and a cryptographic mark of the reference biometric datum, the candidate biometric datum and the reference biometric datum have the two marks as respective cryptographic marks, and that the two biometric data coincide; and transmitting, to the server (3), said zero-knowledge proof, the cryptographic mark of the candidate biometric datum and the cryptographic mark of the reference biometric datum, for checking by data processing means (31) of the server (3);
and **in that** it further comprises a step (d) of the processing means (31) of the server (3) checking the validity of the zero-knowledge proof, and, if the zero-knowledge proof is valid, of encrypting the virtual key of the item of locking equipment (2) depending on a secret key of the server (3), said given cryptographic function depending on said secret key of the server (3), and transmitting, to the mobile terminal (1) from the server (3), the encrypted virtual key of the item of locking equipment (2),
step (e) comprising deactivating the item of locking equipment (2) so as to make it possible to use the vehicle (20) .

2. Method according to Claim 1, in which the mobile terminal (1) comprises data storage means (12) storing a white-box implementation of said cryptographic function, said white-box implementation being a representation of the cryptographic function which does not make it possible to recover the internal states or the parameters when the operation is executed.

3. Method according to Claim 2, in which step (a) comprises the data processing means (31) of the server (3) previously generating said white-box implementation of the cryptographic function depending on said secret key of the server (3), and loading said white-box implementation of said cryptographic function.

4. Method according to one of Claims 1 to 3, comprising a previous step (a0) of loading at least one official document, in particular at least two official documents including a driving licence and proof of identity.

5. Method according to Claims 3 and 4 in combination, in which said white-box implementation is generated following the checking of said official document by the data processing means (31) of the server (3).

6. Method according to one of Claims 4 and 5, in which step (a0) comprises the data processing means (31) of the server (3) or the data processing means (11) of the terminal (1) generating the reference biometric datum on the basis of a reference biometric trait associated with said official document.

7. Method according to one of Claims 1 to 6, in which step (e) comprises transmitting a challenge from the item of locking equipment (2), and the data processing means (11) of the terminal (1) determining a response to said challenge by applying said cryptographic function to the encrypted virtual key and to the challenge.

8. Method according to one of Claims 1 to 7, in which the vehicle (20) further comprises biometric acquisition means (24), the method further comprising a step (f) of:
- the biometric acquisition means (24) of the vehicle acquiring a confirmation biometric datum, and transmitting to the terminal (1); and
- the data processing means (11) of the terminal (1) checking that the confirmation biometric datum coincides with the candidate biometric datum and/or the reference biometric datum.

9. Assembly of a mobile terminal (1) and of a server (3) for remotely controlling an item of equipment (2) for locking a vehicle (20), which are connected as well as to the item of locking equipment (2) via a network (10), the terminal (1) comprising data processing means (11) which are configured to implement a given cryptographic function and biometric acquisition means (14), the server (3) comprising data processing means (31),
in which the data processing means (11) of the terminal (1) are configured for:
- transmitting, from the terminal (1) to the server (3), a request to authenticate with the item of locking equipment (2);
- the acquisition means (14) acquiring a candidate biometric datum;
- checking that the candidate biometric datum coincides with a reference biometric datum which the terminal (1) has at its disposal;
- authenticating the mobile terminal (1) with the item of locking equipment (2) by virtue of said cryptographic function and of an encrypted virtual key of the item of locking equipment (2);
**characterized in that** the data processing means (11) of the terminal (1) are further configured for:
- generating a zero-knowledge proof that, given a cryptographic mark of the candidate biometric datum and a cryptographic mark of the reference biometric datum, the candidate biometric datum and the reference biometric datum have the two marks as respective cryptographic marks, and that the two biometric data coincide;
- transmitting, to the server (3), said zero-knowledge proof, the cryptographic mark of the candidate biometric datum, and the cryptographic mark of the reference biometric datum;
- deactivating the item of locking equipment (2) so as to make it possible to use the vehicle (20);
and the data processing means (31) of the server (3) are configured for:
- checking the validity of the zero-knowledge proof;
- if the zero-knowledge proof is valid, encrypting the virtual key of the item of locking equipment (2) depending on a secret key of the server (3), said given cryptographic function depending on said secret key of the server (3), and transmitting, to the mobile terminal (1) from the server (3), the encrypted virtual key of the item of locking equipment (2).

10. Computer program product comprising code instructions for executing a method, according to one of Claims 1 to 8, for remotely controlling an item of equipment (2) for locking a vehicle (20), when the steps of one of Claims 1 to 8 are executed respectively by a mobile terminal, by a server and by an item of equipment for locking a vehicle.

11. Storage medium which can be read by an item of computer equipment comprising the computer program product of Claim 10.
